Europäisches Patentamt

European Patent Office

Office européen des brevets

(11) Publication number: **0 031 249**
**A1**

(12) # EUROPEAN PATENT APPLICATION

(21) Application number: **80304599.6**

(22) Date of filing: **18.12.80**

(51) Int. Cl.³: **F 16 K 31/122**

(30) Priority: **20.12.79 JP 177519/79 U**

(43) date of publication of application:
**01.07.81 Bulletin 81/26**

(84) Designated Contracting States:
**DE FR GB IT NL SE**

(71) Applicant: **Fuji Metal Mfg. Co. Ltd.**
**3-4, 2-chome Itachibori Nishi-ku**
**Osaka(JP)**

(72) Inventor: **Mese, Hisayoshi**
**2-5-813, 3-chome**
**Taishibashi Asahi-ku Osaka(JP)**

(72) Inventor: **Kanaya, Shigeo**
**1208, A-11, 1-23**
**Yamada-nishi Suita Osaka(JP)**

(74) Representative: **Drever, Ronald Fergus et al,**
**Swindell & Pearson 44, Friar Gate**
**Derby DE1 1DA(GB)**

(54) **Valve operating device.**

(57) A valve operating device comprises a closed case (1) having two compressed air channel openings (16, 17) at one end. A cylinder tube (2) is installed in the case (1) with a clearance (7) formed between the tube (2) and an inner peripheral surface of the case (1), a piston (3) being provided in the tube (2) to divide the interior space of the tube (2) into two chambers (11, 12). One (11) of the chambers in the tube (2) is in communication with one (16) of the air channel openings, and the other chamber (12) is in communication with the other air channel opening (17) through the clearance (7) between the cylinder tube (2) and the case (1) inner peripheral surface. A rod (4) movable with the piston (3) operates a valve (8) through a rack and pinion arrangement (6, 5).

./...

0031249

## Valve Operating Device

### BACKGROUND OF THE INVENTION

This invention relates to a valve operating device, and more particularly to a device for opening and closing a valve by a double-acting pneumatic cylinder.

When a usual double-acting pneumatic cylinder is to be used for operating a valve, it is impossible to attach an electromagnetic change-over valve or the like for changing the flow of compressed air directly to the two air inlet-outlet openings which are disposed away from each other at the opposite ends of the cylinder. It is therefore necessary to externally connect a pipe to each of the openings. The pipe thus attached to the cylinder can be an obstacle or is likely to be broken by some article.

### SUMMARY OF THE INVENTION

An object of the present invention is to provide a valve operating device comprising a double-acting pneumatic cylinder with two compressed air channel openings which are disposed close to each other to eliminate the trouble that would result from an external piping arrangement.

Another object of the invention is to provide a valve operating device which is simple and compact in construction.

0031249

The valve operating device of the present invention comprises a closed case having two compressed air channel openings at its one end and a piston rod guide bore opposite to the end, a cylinder tube installed in the case with a clearance formed between the cylinder tube and the inner peripheral surface of the case, a piston provided in the cylinder tube to divide the interior space of the cylinder tube into two chambers, a piston rod fixed to the piston and slidably fitting in the guide bore of the case, the piston rod being formed with a rack, and a pinion operatively connected to a valve and disposed in the vicinity of the guide bore of the case in meshing engagement with the rack on the piston rod. One of the chambers in the cylinder tube is in communication with one of the air channel openings, and the other chamber is in communication with the other air channel opening through the clearance between the cylinder tube and the case inner peripheral surface.

Since the two compressed air channel openings for the present device are formed at one end of the case, pipes can be attached concentrically to this portion to avoid the trouble that otherwise would result. Furthermore an electromagnetic valve or the like for controlling the cylinder can be attached directly to the air channel opening portion of the case.

The present device is very simple in construction and is compact since the overall assembly is housed in the case.

Other features of the invention will become apparent from the following description.

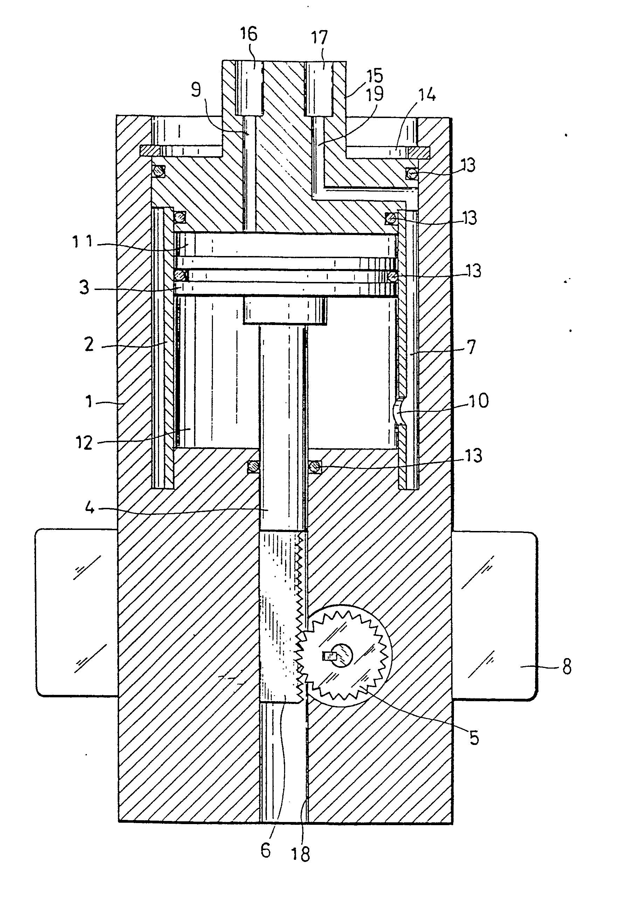

BRIEF DESCRIPTION OF THE DRAWING

The drawing is a view in vertical section showing an embodiment of the invention.

DESCRIPTION OF THE PREFERRED EMBODIMENT

The valve operating device shown has a case main body 1 which is open at its one end. A piston rod guide bore 18 extends through the case main body 1 from its interior to the other end thereof. A cylinder tube 2 is installed in the case main body 1 to form a clearance 7 between the inner peripheral surface of the body 1 and the cylinder tube 2. The clearance is annular in cross section. A closure 15 for closing the open ends of the case main body 1 and the cylinder tube 2 is fitted in the body 1 and the tube 2 and retained in place by a snap ring 14. The case main body 1 and the closure 15 constitute a case for the operating device. A piston 3 is disposed within the cylinder tube 2. These components provide a pneumatic cylinder. A piston rod 4 fixed to the piston 3 is slidably fitted in the guide bore 18 of the main body 1. The piston rod 4 is provided with a rack 6 at its free end. A pinion 5 meshing with the rack 6 on the rod 3 is disposed in the vicinity of the guide bore 18. The case main body 1 is attached to a valve 8. The pinion 5, which is operatively connected to the valve 8, opens and closes the valve 8 when rotated. Two compressed air channel openings 16 and 17 are formed in one end of the closure 15 of the case. The air channel opening 16 is in communication with one chamber 11 in the cylinder tube 2 through an air channel 9 formed in the closure 15. Through an air channel 19 formed in the closure 15, the other air channel opening 17 communicates with the clearance 7 between the main body 1 and the cylinder tube 2. The clearance 7 further communicates with the other chamber 12 of the tube 2 via an aperture 10 formed in the tube 2. Indicated at 13 are O-rings.

The compressed air supplied to the opening 16 flows through the channel 9 into the chamber 11. The compressed air fed to the other opening 17 flows into the other chamber 12 by way of the channel 19, clearance 7 and aperture 10. When supplied to the openings 16 and 17 alternately, compressed air reciprocates the piston 3, which in turn rotates the pinion 5 reciprocatingly to open or close the valve 8.

The clearance 7 between the case main body 1 and the cylinder tube 2, which serves as a fluid passageway, need not be precisely annular in cross section as mentioned above but can be in the form of a groove.

Pipes may be connected to the air channel openings 16 and 17 of the closure 15 from outside, or an electromagnetic valve or the like may be attached directly to the opening portion. In either case, no trouble occurs since the pipes can be arranged locally at one portion or no pipe is needed for the valve or like means so attached.

Claims:-

1. A valve operating device characterised by a closed case (1) having two compressed air channel openings (16, 17) at one end and a piston rod guide bore (18) communicating between an interior space and the other end of the case (1), a substantially cylindrical member (2) installed in the case (1) with a clearance (7) formed between the member (2) and an inner peripheral surface of the case (1), a piston (3) provided in the member (2) to divide the interior space of the member (2) into two chambers (11, 12), a piston rod (4) fixed to the piston (3) and slidably fitting in the guide bore (18) of the case (1), the piston rod (4) being formed with a rack (6), and a pinion (5) operatively connected to a valve (8) and disposed in the vicinity of the guide bore (18) of the case (1) in meshing engagement with the rack (6) on the piston rod (4), one (11) of the chambers in the member (2) being in communication with one (16) of the compressed air channel openings, the other chamber (12) communicating with the other compressed air channel opening (17) through the clearance (7) between the member (2) and the inner peripheral surface of the case (1).

2. A valve operating device according to claim 1, characterised in that the case comprises a case main body (1) having an open end and the piston rod guide bore (18) opposed to the open end, and a closure (15) closing the open ends of the case main body (1) and the member (2) and having the two compressed air channel openings (16, 17).

3.    A valve operating device according to claim 1 or 2, characterised in that the other chamber (12) in the member (2) is in communication with the clearance (7) between the member (2) and the case inner peripheral surface through an aperture (10) formed in the member (2).

4.    A valve operating device according to any of claims 1 to 3, characterised in that the clearance (7) between the member (2) and the case inner peripheral surface is annular in cross section.

0031249

European Patent Office

Application number

EP 80 30 4599.6

# EUROPEAN SEARCH REPORT

| Category | Citation of document with indication, where appropriate, of relevant passages | Relevant to claim |
|---|---|---|
| | DE - A - 1 813 238 (BELL AEROSPACE)<br>* fig. 2 *<br>-- | 1 |
| | FR - A - 1 458 746 (COMERCIAL ESPAÑOLA PARA LA DIFUSION INDUSTRIAL et al.)<br>* fig. 1 *<br>-- | 1 |
| A | DE - A1 - 2 551 126 (GREER HYDRAULICS)<br>-- | |
| A | DE -B - 1 290 398 (AEG-KANIS)<br>-- | |
| A | DE - B - 1 118 553 (HERION)<br>-- | |
| A | US - A - 2 690 765 (F.J. KRUMMEL)<br>---- | |

**CLASSIFICATION OF THE APPLICATION (Int. Cl.³)**

F 16 K 31/122

**TECHNICAL FIELDS SEARCHED (Int. Cl.³)**

F 16 K 31/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| Berlin | 04-03-1981 | SCHLABBACH |

EPO Form 1503.1 06.78